Europäisches Patentamt

European Patent Office

Office européen des brevets

(11) Veröffentlichungsnummer: **0 331 768**
**A1**

## (12) EUROPÄISCHE PATENTANMELDUNG

(21) Anmeldenummer: 88103519.0

(22) Anmeldetag: 07.03.88

(51) Int. Cl.⁴: **B29B 13/02**

(43) Veröffentlichungstag der Anmeldung:
**13.09.89 Patentblatt 89/37**

(84) Benannte Vertragsstaaten:
**AT BE CH DE ES FR GB GR IT LI LU NL SE**

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**
Erfinder: **Jarrell, Willis H.**
**404 Dividend Drive**
**Peachtree City Georgia 30269(US)**

(74) Vertreter: **Marx, Lothar, Dr.**
**Patentanwälte Schwabe, Sandmair, Marx**
**Stuntzstrasse 16 Postfach 86 02 45**
**D-8000 München 80(DE)**

(54) Vorrichtung zum Verflüssigen eines hochpolymeren, thermoplastischen Werkstoffes.

(57) Ein Vorrichtung zum Verflüssigen eines hochpolymeren, thermoplastischen Werkstoffes, insbesondere eines Schmelzklebers auf der Basis von Polyurethan, mit einer Schmelzeinrichtung für den thermoplastischen Werkstoff weist eine auf der Oberfläche des verflüssigten, thermoplastischen Werkstoffes in der Schmelzeinrichtung schwimmende Schutzschicht aus einem flüssigen Sperrmedium auf, das weder mit der Umgebungsluft noch mit dem verflüssigten, thermoplastischen Werkstoff reagiert.

# Vorrichtung zum Verflüssigen eines hochpolymeren, thermoplastischen Werkstoffes

Die Erfindung betrifft eine Vorrichtung zum Verflüssigen eines hochpolymeren, thermoplastischen Werkstoffes, insbesondere eines Schmelzklebers auf der Basis von Polyurethan, der im Oberbegriff des Anspruchs 1 angegebenen Gattung.

Schlecht fließende, hochviskose, thermoplastische, hochpolymere Werkstoffe, nämlich hochviskose Dichtungsmassen, Buthylen sowie Haftschmelzkleber, insbesondere Schmelzkleber auf der Basis von Polyurethan, können in sogenannten "Faßschmelzern" verflüssigt werden, also Heizeinrichtungen, die in den geöffneten Transportbehälter für einen solchen thermoplastischen Werkstoff eingeführt werden und die hochviskose Masse erwärmen, so daß sie fließfähig wird und nach unten aus dem Transportbehälter herausläuft.

In einem solchen Faßschmelzer lassen sich jedoch keine thermoplastischen Werkstoffe verarbeiten, die sehr empfindlich auf den in der Luft vorhandenen Sauerstoff reagieren und insbesondere bei einer solchen Reaktion mit dem Sauerstoff aushärten. Dies gilt im extremen Maße für Schmelzkleber auf der Basis von Polyurethan, so daß die aus der DE-PS 36 00 020 bekannte Verflüssigungsvorrichtung entwickelt wurde, bei der ein nach unten offener Transportbehälter in dem oberen Teil eines beheizbaren, abgedichteten Vorratsbehälters angeordnet wird; unter dem Transportbehälter befindet sich der untere, als Puffervolumen dienende Teil des Vorratsbehälters, so daß während der gesamten Verflüssigung des hochpolymeren, in dem Transportbehälter befindlichen Werkstoffes eine Abschirmung gegen die Umgebungseinflüsse durch den Vorratsbehälter und gegebenenfalls noch durch zusätzliche Einführung eines Schutzgases erfolgt.

Weitere, spezielle Ausgestaltungen der Verflüssigungsvorrichtung nach der DE-PS 36 00 020 werden in der deutschen Patentanmeldung P 36 36 124.0-16 und der deutschen Patentanmeldung P 37 02 160.5-16 beschrieben.

Bei einer solchen Verflüssigungsvorrichtung ist der Vorratsbehälter so ausgelegt, daß der gesamte Inhalt des Transportbehälters in dem unteren, als Puffervolumen dienenden Teil des Vorratsbehälters aufgenommen wird und der Transportbehälter nach seiner Entleerung ausgetauscht wird. Hierbei kann es jedoch zu einem Kontakt mit der Umgebungsatmosphäre und damit zu einer Sauerstoff-Reaktion kommen. Außerdem ist für viele Anwendungsfälle die vollständige Abschirmung des verflüssigten, hochpolymeren Werkstoffes und damit seines Transportbehälters in einem abgedichteten Vorratsbehälter, eventuell noch unter einer Schutzgashaube nicht erforderlich, so daß diese Lösung zu aufwendig wird.

In der älteren Gebrauchsmusteranmeldung G 88 00 374.4 und in der parallelen europäischen Patentanmeldung, amtliches Aktenzeichen Nr. 88 100 465.9, wird deshalb eine Vorrichtung zum Verflüssigen eines hochpolymeren, thermoplastischen Werkstoffes, insbesondere eines Schmelzklebers auf der Basis von Polyurethan, mit einer Vorschmelzeinrichtung für den thermoplastischen Werkstoff und mit einem mit der Vorschmelzeinrichtung verbundenen Speicher- und Dosierbehälter beschrieben; dabei schwimmt auf der Oberfläche des verflüssigten, thermoplastischen Werkstoffes in dem Speicher- und Dosierbehälter eine Schutzschicht aus einem fluiden Sperrmedium, das weder mit der Umgebungsluft noch mit dem verflüssigten, thermoplastischen Werkstoff reagiert; eine Leitung führt dem Speicher- und Dosierbehälter an einer Stelle, die unter dem Flüssigkeitsspiegel des verflüssigten, thermoplastischen Werkstoffes in dem Speicher- und Dosierbehälter liegt, den verflüssigten, thermoplastischen Werkstoff von der abgeschlossenen Vorschmelzeinrichtung zu.

Auf diese Weise wird jeder Kontakt zwischen dem verflüssigten thermoplastischen Werkstoff und der Umgebungsatmosphäre vermieden, so daß es nicht zu unerwünschten Reaktionen kommt.

Nachteilig ist bei der bekannten Verflüssigungsvorrichtung der relativ komplizierte und aufwendige Aufbau mit der Vorschmelzeinrichtung einerseits und dem Speicher- und Dosierbehälter andererseits, zumal hierzu jeweils getrennte Steuerungen vorgesehen werden müssen.

Der Erfindung liegt deshalb die Aufgabe zugrunde, eine Vorrichtung zum Verflüssigen eines hochpolymeren, thermoplastischen Werkstoffes, insbesondere eines Schmelzklebers auf der Basis von Polyurethan, der angegebenen Gattung zu schaffen, bei der die oben erwähnten Nachteile nicht auftreten. Insbesondere soll eine Verflüssigungsvorrichtung vorgeschlagen werden, die auf konstruktiv einfache Weise die völlige Abschirmung des verflüssigten thermoplastischen Werkstoffes gegen die Umgebungsatmosphäre gewährleistet.

Dies wird neuerungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf der Feststellung, daß die räumliche und "physikalische" Trennung zwischen der Vorschmelzeinrichtung und dem Speicher- und Dosierbehälter nicht erforderlich ist, sondern daß ein übliches, beispielsweise für die Aufschmelzung von Hot melt bekanntes Verflüssigungsgerät eingesetzt werden kann, wenn auf der Oberfläche des verflüssigten thermoplastischen Werkstoffes in diesem Verflüssigungsgerät eine Schutzschicht aus einem fluiden Sperrmedium schwimmt, das weder mit der Umgebungsluft noch mit dem verflüssigten, thermoplastischen Werkstoff reagiert. Der verflüssigte Werkstoff aus diesem Verflüssigungsgerät kann sofort mittels einer üblichen Förderpumpe der weiteren Verarbeitung beispielsweise einem Auftragkopf zugeführt werden.

Eine solches Verflüssigungsgerät weist einen Vorratsbehälter auf, in den beispielsweise die blockförmigen, festen Ausgangsmassen eingelegt werden. Dann wird das flüssige Sperrmedium eingefüllt, das die Ausgangsmasse vollständig bedeckt.

Nun wird der Vorratsbehälter erwärmt, so daß die Ausgangsmasse schmilzt; aufgrund der Unterschiede in der Dichte schwimmt jedoch das Sperrmedium immer auf der Oberfläche der flüssigen Masse, so daß es nicht zu einem Kontakt mit der Umgebungsatmosphäre kommen kann.

Der flüssige, hochpolymere Werkstoff wird dann auf die übliche Weise am Boden des Vorratsbehälters abgezogen und mittels einer Förderpumpe der weiteren Verarbeitung zugeführt.

Mit einem solchen Verflüssigungsgerät kann kontinuierlich gearbeitet werden, da die blockförmigen, festen Ausgangsmassen von oben her durch die Sperrschicht hindurch in den Vorratsbehälter nachgefüllt werden können; die Temperaturerhöhung dieses nachgefüllten Materials beginnt also erst, nachdem es vollständig durch die Sperrschicht bedeckt ist, so daß es auch jetzt nicht zu einer unerwünschten Reaktion kommen kann.

Als flüssiges Sperrmedium wird eine organische Flüssigkeit verwendet, nämlich Vaseline oder ähnliche neutrale Öle und Fette auf der Basis fester und/oder flüssiger Erdölkohlenwasserstoffe mit Schmelzpunkten von 35° bis 60° C. Diese Materialien haben eine solche Konsistenz, daß sie ständig eine geschlossene Sperrschicht bilden, die auch beim Nachfüllen einer festen Ausgangsmasse den bereits verflüssigten hochpolymeren Werkstoff gegen die Umgebungsatmosphäre abschirmt.

Wesentlich ist nur, daß dem Vorratsbehälter der verflüssigte hochpolymere Werkstoff an einer Stelle entnommen wird, die möglichst weit unter dem Flüssigkeitsspiegel liegt, also zweckmäßigerweise am Boden des Vorratsbehälters.

Zur zusätzlichen Abschirmung kann es manchmal zweckmäßig sein, über der Sperrschicht aus dem flüssigen Schutzmedium noch eine weitere gasförmige Sperrschicht, beispielsweise aus Stickstoff vorzusehen. Dieses gasförmige Schutzmedium überspült dann die Oberfläche der eigentlichen flüssigen Schutzschicht und dient als weitere Abschirmung.

Insbesondere zum mechanischen Schutz des empfindlichen, verflüssigten hochpolymeren Werkstoffes in dem Vorratsbehälter kann ein Deckel vorgesehen sein, der jedoch nicht besonders sorgfältig abgedichtet werden muß, da, wie erläutert, die eigentliche Abschirmfunktion durch die flüssige Sperrschicht erfüllt wird. Es ist also wesentlich, daß dieser Deckel leicht geöffnet und verschlossen werden kann, um das Nachfüllen der festen Ausgangsmasse zu ermöglichen.

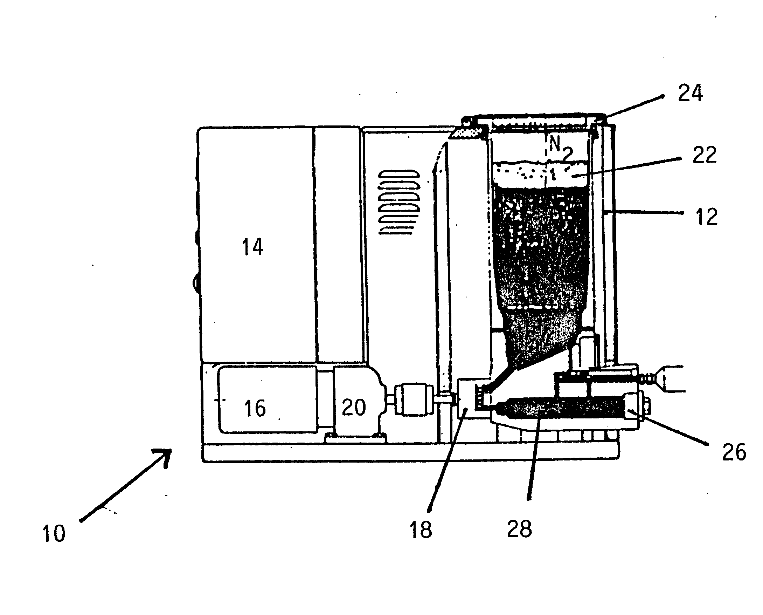

Die Erfindung wird im folgenden anhand eines Ausführungsbeispiels unter Bezugnahme auf die beiligende schematische Zeichnung näher erläutert, deren einzige Figur einen Schnitt durch ein Verflüssigungsgerät für Schmelzkleber auf der Basis von Polyurethan zeigt.

Das aus der Figur ersichtliche, allgemein durch das Bezugzeichen 10 angedeutete Verflüssigungsgerät weist einen lotrecht angeordneten Vorratsbehälter 12 auf, in dem der verflüssigte Schmelzkleber durch die schwarze Masse angedeutet ist. Dieses Verflüssigungsgerät 10 enthält den üblichen Schaltschrank 14 mit einem Elektromotor 16 für eine Förderpumpe 18, in aller Regel eine Zahnradpumpe, die über eine Kupplung und/oder ein Getriebe 20 mit dem Elektromotor 16 verbunden ist.

Auf dem verflüssigten Schmelzkleber in dem Vorratsbehälter 12 schwimmt eine Schutzschicht 22 aus einem flüssigen Sperrmedium, das weder mit dem empfindlichen verflüssigten Schmelzkleber noch mit der Luftatmosphäre reagiert. Als flüssiges Sperrmedium kommen insbesondere flüssige organische Substanzen, nämlich Vaseline oder ähnliche neutrale Öle und Fette, in Frage.

Um die Abschirmwirkung noch weiter zu verbessen, kann ebenfalls nicht reaktives inertes Gas, im allgemeinen Stickstoff ($N_2$), über die freie obere Fläche der Schutzschicht 22 geleitet werden.

Das obere Ende des Vorratsbehälters ist durch einen leicht abnehmbaren Deckel 24 verschlossen.

Vom Boden des Vorratsbehälters 12 wird dem Ausgang 26 des Verflüssigungsgerätes 10 der verflüssigte Schmelzkleber über eine Leitung 28 zugeführt.

In der Figur ist außerdem noch eine Rückführleitung dargestellt, die über ein durch eine Feder vorgespanntes Ventil verschlossen wird; bei Überschreiten eines vorgegebenen Druckes öffnet sich dieses Ventil gegen die Wirkung der Feder, so daß der verflüssigte Schmelzkleber aus der Leitung 28 wieder unmittelbar dem Vorratsbehälter 12 zugeführt wird.

In die Wände des Vorratsbehälters 12 und in seinen Boden sind Heizelemente (nicht dargestellt) integriert, die die Temperatur des Schmelzklebers in dem Vorratsbehälter 12 und auf dem Transport vom Vorratsbehälter zum Auslaß 26 auf einen vorgegebenen Wert regeln.

Bei Betriebsbeginn wird das in aller Regel blockförmige, feste Ausgangsmaterial für den Schmelzkleber auf der Basis von Polyurethan oder einer anderen, in Verbindung mit der Atmosphäre reagierenden Formulierung in den Vorratsbehälter 12 eingefüllt. Gleichzeitig, vorher oder nachher wird das Material für die Sperrschicht 22 zugegeben, das die feste Ausgangsmasse vollständig bedekken muß, um jeden Kontakt mit der Umgebungsatmosphäre zu verhindern. Dann wird der Deckel 24 verschlossen und gegebenenfalls das Spülgas Stickstoff eingeführt.

Wird nun der Vorratsbehälter 12 und sein Boden erwärmt, so schmilzt die Ausgangsmasse auf; aufgrund der unterschiedlichen Dichte des Schmelzklebers einerseits und des flüssigen Sperrmediums andererseits schwimmt das Sperrmedium auf der Oberfläche des verflüssigten Schmelzklebers, der nun mittels der Pumpe 18 über die Leitung 28 abgezogen und dem Ausgang 26 zugeführt wird.

Bei Abnahme des Schmelzklebervolumens in dem Vorratsbehälter 12 unter einen vorgegebenen Minimalwert wird der Deckel 24 geöffnet und neues, blockförmiges, festes Ausgangsmaterial in den Vorratsbehälter 12 gelegt; dieses Material durchdringt die flüssige Sperrschicht 22, ohne daß dabei deren Abschirmwirkung aufgehoben wird. Das neue Material wird ebenfalls aufgeschmolzen und dann mittels der Pumpe 16 dem Ausgang 26 zugeführt.

## Ansprüche

1. Vorrichtung zum Verflüssigen eines hochpolymeren, thermoplastischen Werkstoffes, insbesondere eines Schmelzklebers auf der Basis von Polyurethan,

a) mit einer Schmelzeinrichtung für den thermoplastischen Werkstoff, **dadurch gekennzeichnet,** daß

b) auf der Oberfläche des verflüssigten, thermoplastischen Werkstoffes in der Schmelzeinrichtung (12) eine Schutzschicht (22) aus einem flüssigen Sperrmedium schwimmt, das weder mit der Umgebungsluft noch mit dem verflüssigten, thermoplastischen Werkstoff reagiert.

2. Vorrichtung nach Anspruch 1, dadurch gekennzeichnet, daß als flüssiges Sperrmedium eine organische Flüssigkeit verwendet wird.

3. Vorrichtung nach einem der Ansprüche 1 oder 2, dadurch gekennzeichnet, daß als organische Flüssigkeit Vaseline oder ähnliche neutrale Öle oder Fette eingesetzt werden.

4. Vorrichtung nach einem der Ansprüche 1 bis 3, dadurch gekennzeichnet, daß der Schmelzeinrichtung (12) der verflüssigte, thermoplastische Werkstoff im Bereich seines Bodens entnommen wird.

5. Vorrichtung nach einem der Ansprüche 1 bis 4, gekennzeichnet durch einen abnehmbaren Deckel (24) für die Schmelzeinrichtung (12).

6. Vorrichtung nach einem der Ansprüche 1 bis 5, dadurch gekennzeichnet, daß die Schmelzeinrichtung einen heizbaren Vorratsbehälter (12) aufweist, dessen Boden über eine Leitung (28) mit einem Auslaß (26) verbunden ist, und daß eine Förderpumpe (18) den verflüssigten Werkstoff aus dem Vorratsbehälter (12) über die Leitung (28) zum Auslaß (26) transportiert.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E,D | DE-U-8 800 374 (CLAASEN) <br> * Seite 8, Zeilen 3-12 * <br> --- | 1-6 | B 29 B 13/02 |
| X | DE-C- 738 946 (NOBEL DYNAMIT AG) <br> * Seite 2, Zeilen 37-49; Anspruch 2 * <br> --- | 1-4 | |
| A | EP-A-0 228 689 (CLAASEN) <br> * Anspruch 1; Figuren * & DE-A-3 600 020 (Kat. D) <br> --- | | |
| A | US-A-3 412 903 (VAN RIPER et al.) <br> * Spalte 1, Zeilen 35-42 * <br> --- | | |
| A | US-A-3 285 592 (KEIZO VEDA et al.) <br> * Spalte 2, Zeilen 25-43 * <br> --- | | |
| A | US-A-3 952 921 (TANNER) <br> * Spalte 4, Zeilen 33-38 * <br> ----- | | |

**RECHERCHIERTE SACHGEBIETE (Int. Cl.4)**

B 29 B

Der vorliegende Recherchenbericht wurde für alle Patentansprüche erstellt

| Recherchenort | Abschlußdatum der Recherche | Prüfer |
|---|---|---|
| DEN HAAG | 27-09-1988 | MOLTO PINOL F.J. |